# EUROPÄISCHE PATENTSCHRIFT

(11) **EP 3 671 984 B1**
(45) Veröffentlichungstag und Bekanntmachung des Hinweises auf die Patenterteilung: **31.03.2021**
(21) Anmeldenummer: 18214108.5
(22) Anmeldetag: 19.12.2018
(51) Int. Cl.: H02B 1/18, H01H 85/02, H01H 31/12

(54) **SCHALTEINRICHTUNG AUFWEISEND EIN TRÄGERTEIL UND AUFWEISEND EINE IN DEM TRÄGERTEIL ANGEORDNETE KOMPONENTE EINER ELEKTRONIK**
SWITCHING DEVICE COMPRISING A SUPPORT PART AND A COMPONENT OF AN ELECTRONIC SYSTEM IN THE SUPPORT PART
DISPOSITIF DE COMMUTATION COMPRENANT UNE PIÈCE PORTEUSE ET COMPORTANT UN COMPOSANT D'UNE ÉLECTRONIQUE DISPOSÉ DANS LA PIÈCE PORTEUSE

(43) Veröffentlichungstag der Anmeldung: 24.06.2020
(73) Patentinhaber: Jean Müller GmbH Elektrotechnische Fabrik, 65343 Eltville am Rhein (DE)
(72) Erfinder: SCHMIDT, Patrik, 65366 Geisenheim (DE); KLOTZ, Daniel, 65391 Lorch (DE); ALDABBAG, Ammar, 55411 Bingen am Rhein (DE)
(74) Vertreter: Franke, Markus

(56) Entgegenhaltungen:
- EP-A1- 1 387 454
- EP-A1- 2 546 856
- DE-A1-102007 051 419
- DE-U1- 29 705 224

## Beschreibung

Die Erfindung betrifft eine Schalteinrichtung, insbesondere eine Schaltleiste für Niederspannungs-Hochleistungs-Sicherungen (NH-Sicherungen). Derartige NH-Sicherungen werden auch als NH-Sicherungseinsätze bezeichnet. Beispielsweise ist aus der DE 38 12 504 A1 eine NH-Lastschaltleiste bekannt.

An Schalteinrichtungen, die typischerweise der Stromverteilung dienen, werden immer höhere Anforderungen gestellt. Insbesondere ist vorgesehen, dass Schalteinrichtungen mit Komponenten einer Elektronik zur Messwerterfassung und -verarbeitung ausgerüstet sind, beispielsweise um permanent alle strom- und spannungsrelevanten Daten zu überwachen bzw. zu messen. Beispielsweise können bei derartigen Schalteinrichtungen Stromwandler Verwendung finden, die der Messung des die Schalteinrichtung durchfließenden Stroms dienen. Je nachdem, wie viele Phasen zu messen sind, finden ein oder mehrere Stromwandler Verwendung. Mittels entsprechender Stromwandler kann die Messung der jeweiligen Phase ohne Stromunterbrechung dauerhaft erfolgen. Bei dem Stromwandler kann es sich um einen handelsüblichen Stromwandler mit Kern handeln, es finden aber auch sogenannte Rogowski-Spulen als Stromwandler Verwendung. Der bzw. die Stromwandler sind häufig innerhalb der Schalteinrichtung angeordnet. Als Komponente einer Elektronik können auch Stromsensoren, wie beispielsweise Hall-Sensoren Verwendung finden. Des Weiteren kommen als Komponente einer Elektronik auch andere Sensoren, wie beispielsweise Temperatursensoren oder Feuchtigkeitssensoren in Betracht.

Aus der EP 2 546 856 A1 ist eine Schalteinrichtung, konkret eine Sicherungsleiste oder Lastschaltleiste für NH-Sicherungen, mit in der Schalteinrichtung angeordneten Stromwandlern bekannt, welche die Merkmale des Oberbegriffs des Patentanspruchs 1 aufweist. Die Sicherungsleiste oder Lastschaltleiste weist ein Trägerteil und eine in dem Trägerteil angeordnete Komponente einer Elektronik, nämlich einen Stromwandler, auf, wobei das Trägerteil ein Unterteil und ein mit dem Unterteil verbindbares Lagerteil in Form einer Abdeckung aufweist, wobei an einer Frontseite des Unterteils zumindest ein Paar von Kontakten angeordnet ist, welches der Aufnahme einer elektrischen Sicherung oder eines Trennmessers dient. Die Kontakte sind mit in dem Unterteil gelagerten Stromleitern verbunden, welche wiederum mit Stromabgängen und Stromeingängen verbunden sind. Bei der Sicherungsleiste bzw. Lastschaltleiste ist des Weiteren vorgesehen, dass der mindestens eine Stromwandler einer Anordnung von Kontakt und Stromleiter zugeordnet ist, wobei die Anordnung von Kontakt und Stromleiter eine Öffnung des Stromwandlers durchsetzt. Dabei ist die Anordnung von Kontakt und Stromleiter derart ausgestaltet, dass der Stromwandler frontseitig auf die Anordnung von Kontakt und Stromleiter aufsteckbar ist. Zu diesem Zweck ist vorgesehen, dass der Querschnitt der Öffnung des Stromwandlers größer ist als der Querschnitt der Anordnung von Kontakten und Stromleiter in einem Aufsteckbereich der Anordnung. Somit ist es bei der Sicherungsleiste bzw. Lastschaltleiste nach der EP 2 546 856 A1 möglich, ohne Demontage des Trägerteils oder von Teilen des Trägerteils, die Leiste mit einem oder mehreren Stromwandlern nachzurüsten.

Die EP 1 387 454 betrifft eine Geräteeinheit mit einem Kontakt zum steckbaren Verbinden mit einer ortsfesten Stromschiene, wobei der Kontakt außerhalb eines Gehäuses angeordnet ist, das eine Schalteinheit aufnimmt. Die Geräteeinheit weist ein Gehäuse, eine Abdeckung und eine Stromerfassungseinrichtung auf, wobei ein zwischen der Abdeckung und dem Gehäuse gebildeter Raum der Aufnahme der Stromerfassungseinrichtung dient. Bei der Montage der Stromerfassungseinrichtung wird die Stromerfassungseinrichtung bei abgenommener Abdeckung auf einen Kontakt der Stromerfassungseinrichtung aufgesteckt und anschließend die Abdeckung am Gehäuse befestigt.

Aufgabe der vorliegenden Erfindung ist es, eine Schalteinrichtung, die die Merkmale des Oberbegriffs des Patentanspruchs 1 aufweist, derart weiterzubilden, dass die Schalteinrichtung in einfacher Art und Weise mit Komponenten einer Elektronik ausgerüstet werden kann, insbesondere eine bereits bestehende Schalteinrichtung in einfacher Art und Weise mit Komponenten einer Elektronik nachgerüstet werden kann.

Gelöst wird diese Aufgabe durch eine Schalteinrichtung, die die Merkmale des Patentanspruchs 1 aufweist. Die erfindungsgemäße Schalteinrichtung weist ein Trägerteil und eine in dem Trägerteil angeordnete Komponente einer Elektronik auf, wobei das Trägerteil ein Unterteil und ein mit dem Unterteil verbindbares Lagerteil aufweist. An einer Frontseite des Unterteils ist zumindest ein Paar von Kontakten angeordnet, zur Aufnahme einer elektrischen Sicherung oder eines Trennmessers. Ferner ist vorgesehen, dass die Komponente der Elektronik in dem Lagerteil gelagert ist, wobei die Komponente der Elektronik lösbar an dem Lagerteil befestigt ist, wobei das Lagerteil mit der in dem Lagerteil gelagerten Komponente der Elektronik von der Frontseite des Unterteils aus auf das Unterteil aufsteckbar ist.

Unter dem Begriff "Frontseite" wird hierbei eine dem Bediener der Schalteinrichtung zugewandte Seite des Unterteils der Schalteinrichtung verstanden.

Da die Komponente der Elektronik in dem Lagerteil gelagert ist, kann die Schalteinrichtung nicht nur bei der Erstinstallation unkompliziert mit der Komponente der Elektronik versehen werden, sondern es ist auch bei einer montierten Schalteinrichtung unkompliziert ein Nachrüsten dieser Schalteinrichtung mit der Komponente der Elektronik möglich. Zwecks Ausrüsten bzw. Nachrüsten der Schalteinrichtung mit der Komponente der Elektronik wird zunächst bei einer montierten Schalteinrichtung das Lagerteil von dem Unterteil entfernt. Bei einer Erstinstallation der Schalteinrichtung entfällt der Schritt der Demontage von Lagerteil und Unterteil. Bei einer montierten Schalteinrichtung muss gegebenenfalls vor dem Entfernen des Lagerteils von dem Unterteil ein mit dem Trägerteil, insbesondere dem Unterteil, verbundenes Oberteil entfernt werden. Im Anschluss an das Entfernen des Lagerteils von dem Unterteil wird das Lagerteil mit der entsprechenden Komponente der Elektronik versehen, wobei dies besonders unkompliziert möglich ist, da das Lagerteil unabhängig von den übrigen Komponenten der Schalteinrichtung gehandhabt werden kann. So sind für einen Verwender der Schalteinrichtung in einem von dem Unterteil gelösten Zustand des Lagerteils sowohl die dem Unterteil abzuwendende bzw. abgewandte Seite als auch eine dem Unterteil zuzuwendende bzw. zugewandte Seite des Lagerteils unkompliziert zugänglich. Darüber hinaus sind die typischerweise gewichtsintensiven Komponenten der Schaltleiste, wie beispielsweise die Kontakte und ggf. mit den Kontakten verbundene Stromleiter, in dem Unterteil gelagert, welches zwecks Nachrüsten bzw. Ausrüsten der Schalteinrichtung mit der Komponente der Elektronik nicht gehandhabt werden muss. Wie bereits ausgeführt, erfolgt das Nachrüsten bzw. Ausrüsten der Schalteinrichtung mit der Elektronik an dem einfach und unkompliziert zu handhabenden Lagerteil, welches der Lagerung der Komponente der Elektronik dient. Im Anschluss an das Bestücken des Lagerteils mit den Komponenten der Elektronik kann das mit der Komponente der Elektronik bestückte Lagerteil von der Frontseite des Unterteils aus auf das Unterteil aufgesteckt werden. Dementsprechend kann in besonders einfacher Art und Weise eine Schalteinrichtung mit einer Komponente einer Elektronik ausgerüstet bzw. nachgerüstet werden.

Als besonders vorteilhaft wird es angesehen, wenn das Lagerteil entlang einer Geraden von der Frontseite des Unterteils aus auf das Unterteil aufsteckbar ist.

Vorzugsweise sind die Kontakte mit in dem Unterteil gelagerten Stromleitern verbunden.

Bei der Komponente der Elektronik kann es sich insbesondere um eine Komponente zur Strom- oder Spannungsmessung eines den entsprechenden Kontakt oder den entsprechenden Stromleiter durchfließenden Stroms oder einer an dem Kontakt oder dem Stromleiter anliegenden Spannung handeln.

Ferner kann es sich bei der Komponente der Elektronik um eine Komponente zum Abgreifen einer an dem Kontakt oder dem Stromleiter anliegenden Spannung handeln. Beispielsweise um eine weitere Komponente der Elektronik mit Spannung bzw. Strom zu versorgen.

Als Komponente einer Elektronik können auch Stromsensoren, wie beispielsweise Hall-Sensoren Verwendung finden.

Des Weiteren kommen als Komponente einer Elektronik auch andere Sensoren, wie beispielsweise ein Temperatursensor oder ein Feuchtigkeitssensor in Betracht.

Vorzugsweise handelt es sich bei der Komponente der Elektronik um eine mit dem Kontakt oder dem Stromleiter zusammenwirkende Komponente.

Unter dem Begriff "Komponente" wird vorliegend auch eine Anordnung von Komponenten verstanden, beispielsweise eine Einrichtung zur Messdatenerfassung und damit verbundener Verkabelung bzw. Anschlussleitung.

Insbesondere bei einer Komponente der Elektronik, welche eine Verkabelung, beispielsweise Stromleiter oder optische Leiter, aufweist, ist das Nachrüsten bzw. Ausrüsten der Schalteinrichtung mit der Komponente der Elektronik besonders einfach und unkompliziert möglich, da die notwendige Verkabelung separat in dem Lagerteil vorgenommen werden kann.

Vorzugsweise ist das Unterteil frei von jeglichen Komponenten der Elektronik. Als besonders vorteilhaft wird es angesehen, wenn sämtliche der in dem Trägerteil anordenbaren Komponenten der Elektronik in dem Lagerteil gelagert bzw. lagerbar sind.

In einer besonders bevorzugten Ausführungsform der Schalteinrichtung ist das Unterteil mit einer der Frontseite gegenüberliegenden Rückseite an einer Sammelschiene, insbesondere an einem Sammelschienensystem anordenbar.

Aufgrund der erfindungsgemäßen Gestaltung der Schalteinrichtung ist selbst bei einer mit einer Sammelschiene verbundenen Schalteinrichtung ein Nachrüsten der Schalteinrichtung mit der Komponente der Elektronik unkompliziert möglich, da zum Nachrüsten der Komponente, gegebenenfalls nach dem Entfernen eines mit dem Trägerteil, insbesondere dem Unterteil, verbundenen Oberteils, lediglich das Lagerteil von dem Unterteil gelöst werden muss und das Nachrüsten an dem frei handhabbaren Lagerteil erfolgen kann, infolge dessen das Unterteil, abgesehen von der Demontage des Lagerteils, nicht zugänglich sein muss. Somit kann das Lagerteil zwecks Ausrüsten bzw. Nachrüsten der Komponente an einen anderen Ort verbracht werden. Dies ist insbesondere dann von Vorteil, wenn, wie dies typischerweise der Fall ist, mehrere Schalteinrichtungen eng benachbart oder unmittelbar angrenzend aneinander an einem Sammelschienensystem angeordnet sind, sodass die Unterteile der Schalteinrichtungen als solche nur schwer zugänglich sind, bzw. nur in einem sehr begrenzten Raumbereich für den Bediener zugänglich sind. Auch sind häufig die Lichtverhältnisse im Bereich von mit Sammelschienen verbundenen Schalteinrichtungen schlecht, insbesondere wenn diese in einem Schaltschrank verbaut sind. Dementsprechend sind Arbeiten an dem montierten Unterteil aufgrund des geringen Platzbedarfs und/oder schlechter Lichtverhältnisse nur schwer möglich, hingegen das Lösen und Aufstecken des Lagerteils von dem Unterteil bzw. auf das Unterteil relativ leicht möglich. Dadurch, dass die Komponente der Elektronik in dem Lagerteil gelagert ist bzw. das entsprechende Nachrüsten der Komponente der Elektronik lediglich an dem Lagerteil erfolgen muss, ist das Nachrüsten bei einer derartigen Anordnung von Schalteinrichtungen gegenüber Schalteinrichtungen aus dem Stand der Technik deutlich erleichtert.

In einer bevorzugten Ausführungsform weist die Schalteinrichtung ein Oberteil auf, wobei das Oberteil frontseitig an dem Trägerteil anordenbar ist. Vorzugsweise ist das Oberteil auf das Trägerteil, insbesondere auf das Unterteil, aufsteckbar.

Als besonders vorteilhaft wird es angesehen, wenn das Lagerteil zwischen dem Oberteil und dem Unterteil angeordnet ist, insbesondere ein Randbereich des Lagerteils klemmend zwischen dem Oberteil und dem Unterteil, vorzugsweise einer Seitenwand des Oberteils und des Unterteils, gelagert ist. Vorzugsweise ist das Oberteil mit dem Unterteil verbindbar, insbesondere rastierend verbindbar. Es ist aber auch durchaus denkbar, dass das Oberteil und das Unterteil miteinander zusammenwirkende Verriegelungsmittel aufweisen.

Vorzugsweise ist das Lagerteil rastierend in das Unterteil einsteckbar.

Insbesondere ist das Lagerteil mit dem Unterteil verklipst.

In einer besonders bevorzugten Ausführungsform weist das Lagerteil eine Lagerplatte auf, wobei der jeweilige Kontakt eine Durchgangsöffnung der Lagerplatte durchsetzt. Insofern ist vorgesehen, dass die Kontakte des Trägerteils frontseitig gegenüber der Lagerplatte hervorstehen.

In einer bevorzugten Ausführungsform weist das Lagerteil jeweils eine Abdeckhaube zum Abdecken des jeweiligen Kontakts auf. Als besonders vorteilhaft wird es angesehen, wenn die jeweilige Abdeckhaube lösbar mit der Lagerplatte verbunden ist. Vorzugsweise ist die jeweilige Abdeckhaube mit der Lagerplatte rastierend verbunden. Eine Ausführungsform mit von der Lagerplatte lösbaren Abdeckhauben ermöglicht es dem Verwender in besonders einfacher Art und Weise, eine Komponente der Elektronik in einem von der Abdeckhaube abgedeckten Abdeckbereich anzuordnen und somit in einem Bereich des entsprechenden Kontakts des Trägerteils anzuordnen. Bei der im Abdeckbereich anzuordnenden Komponente der Elektronik kann es sich beispielsweise um einen Spannungsabgriff handeln, welcher beim Aufstecken des Lagerteils auf das Unterteil den entsprechenden Kontakt des Trägerteils kontaktiert. Zudem ermöglicht eine Ausführungsform mit von der Lagerplatte lösbaren Abdeckhauben dem Verwender Zugang zu dem entsprechenden Kontakt, ohne eine vollständige Demontage des Lagerteils von dem Unterteil.

In einer besonders bevorzugten Ausführungsform weist die Komponente der Elektronik einen Stromwandler oder einen Stromsensor auf, wobei in einem auf das Unterteil aufgesteckten Zustand des Lagerteils eine Anordnung von Kontakt und Stromleiter eine Öffnung des Stromwandlers bzw. eine Öffnung des Stromsensors durchsetzt. Bei dem Stromwandler kann es sich beispielsweise um eine Rogowski-Spule handeln. Bei dem Stromsensor kann es sich beispielsweise um einen Hall-Sensor handeln.

Es wird als besonders vorteilhaft angesehen, wenn der Kontakt und/oder die Anordnung von Kontakt und Stromleiter einen Aufsteckbereich zum frontseitigen Aufstecken des Stromwandlers oder des Stromsensors auf den Kontakt und/oder die Anordnung von Kontakt und Stromleiter aufweist, wobei der Querschnitt der Öffnung des Stromwandlers bzw. einer Öffnung des Stromsensors größer ist als der Querschnitt des Kontakts und/oder der Anordnung von Kontakt und Stromleiter im Aufsteckbereich.

Als besonders vorteilhaft wird es angesehen, wenn der Stromwandler oder der Stromsensor an einer dem Unterteil zuzuwendenden Seite des Lagerteils, insbesondere an einer dem Unterteil zuzuwendenden Seite der Lagerplatte, angeordnet ist.

Vorzugsweise ist der Stromwandler oder der Stromsensor in das Lagerteil einsteckbar, vorzugsweise von der dem Unterteil zuzuwendenden Seite des Lagerteils aus in das Lagerteil einsteckbar.

In einer bevorzugten Ausführungsform der Schalteinrichtung weist die Komponente der Elektronik einen Spannungsabgriff auf, zum Abgreifen einer Spannung an einem der Kontakte und/oder an einem der Stromleiter.

Als besonders vorteilhaft wird es angesehen, wenn beim Aufstecken des Lagerteils der in dem Lagerteil gelagerte Spannungsabgriff den Kontakt und/oder den Stromleiter kontaktiert.

Vorzugsweise ist der Spannungsabgriff an einer dem Unterteil abzuwendenden Seite des Lagerteils, insbesondere an einer dem Unterteil abzuwendenden Seite der Lagerplatte, angeordnet.

Vorzugsweise ist der Spannungsabgriff in das Lagerteil einsteckbar, insbesondere von der dem Unterteil abzuwendenden Seite des Lagerteils aus in das Lagerteil einsteckbar.

Als besonders vorteilhaft wird es angesehen, wenn der Spannungsabgriff in die Lagerplatte einsteckbar ist.

Besonders bevorzugt ist der Spannungsabgriff in einem von der Abdeckhaube abgedeckten Abdeckbereich des Lagerteils angeordnet, wobei in einem auf das Unterteil aufgesteckten Zustand des Lagerteils der Kontakt ebenfalls im Abdeckbereich der Abdeckhaube angeordnet ist.

In einer bevorzugten Ausführungsform deckt das Lagerteil die Stromleiter und/oder die Kontakte des Trägerteils frontseitig ab. Insofern bildet das Lagerteil ein Abdeckteil.

Hinsichtlich einer Komponente mit einer Verkabelung bzw. mit Anschlussleitungen wird es als besonders vorteilhaft angesehen, wenn das Lagerteil, insbesondere die Lagerplatte, einen Kanal zur Aufnahme einer Anschlussleitung bzw. einer Verkabelung der Komponente der Elektronik aufweist. Um das Bestücken des Lagerteils mit den Komponenten der Elektronik, insbesondere der Verkabelung bzw. Anschlussleitung zu erleichtern, wird es als besonders vorteilhaft angesehen, wenn der Kanal zu einer Seite hin offen gestaltet ist. Dadurch ist ein besonders leichtes Einlegen der Anschlussleitung bzw. der Verkabelung in das Lagerteil ermöglicht. Als besonders vorteilhaft wird es angesehen, wenn der Kanal als ein zu der dem Unterteil abzuwendenden Seite hin offener Kanal ausgebildet ist.

In einer besonders bevorzugten Ausführungsform der Schalteinrichtung ist vorgesehen, dass das Oberteil den zur Seite hin offenen Kanal abdeckt, insbesondere den zu der dem Unterteil abzuwendenden Seite hin offenen Kanal abdeckt. Dadurch sind zum einen der Kanal hinsichtlich eines Vornehmens der Verkabelung bzw. einem Einlegen bzw. Austauschen der Anschlussleitungen besonders einfach zugänglich und andererseits bei einer montierten Schalteinrichtung mit Oberteil die Verkabelung bzw. die Anschlussleitungen durch das den Kanal abdeckende Oberteil besonders gut gegen von außen einwirkende Kräfte geschützt.

Die Komponente der Elektronik ist lösbar an dem Lagerteil, insbesondere der Lagerplatte, befestigt, beispielsweise mittels separater Befestigungsmittel, wie beispielsweise einer Schraube, an dem Lagerteil bzw. der Lagerplatte befestigt.

Als besonders vorteilhaft wird es angesehen, wenn die Komponente der Elektronik mit dem Lagerteil, insbesondere der Lagerplatte, rastierend verbindbar und somit an dem Lagerteil befestigbar bzw. gehalten ist.

Als besonders vorteilhaft wird es angesehen, wenn die Komponente der Elektronik eine Haltestruktur und das Lagerteil, insbesondere die Lagerplatte, eine zu der Haltestruktur korrespondierende Gegenstruktur aufweist, zum Halten der Komponente an dem Lagerteil, insbesondere zum Halten der Komponente an der Lagerplatte. Dadurch ist die Komponente besonders einfach mit dem Lagerteil bzw. der Lagerplatte verbindbar, insbesondere die Komponente in das Lagerteil bzw. die Lagerplatte rastierend einsteckbar.

Als besonders vorteilhaft wird es angesehen, wenn die Haltestruktur und die Gegenstruktur als Klipsverbindung ausgebildet sind. Dadurch ist ein besonders einfaches Anbringen und Lösen der Komponente von dem Lagerteil bzw. der Lagerplatte möglich.

Vorzugsweise sind die Anschlussleitungen der Komponente der Elektronik auf einer dem Unterteil abzuwendenden Seite des Lagerteils angeordnet, vorzugsweise auf einer dem Unterteil abzuwendenden Seite der Lagerplatte angeordnet. Dadurch sind die Anschlussleitungen frontseitig besonders gut zugänglich, sodass eine besonders schnelle Überprüfung der Funktion der Anschlussleitungen und ggf. ein Austausch bzw. Verlegen der Anschlussleitungen auch bei mit dem Unterteil verbundenen Lagerteil erfolgen kann.

Dabei wird es als besonders vorteilhaft angesehen, wenn der die Anschlussleitungen aufnehmende Kanal auf einer dem Unterteil abzuwendenden Seite des Lagerteils ausgebildet ist, insbesondere auf einer dem Unterteil abzuwendenden Seite der Lagerplatte ausgebildet ist.

### Figurenbeschreibung

In den nachfolgenden Figuren ist die Erfindung anhand eines bevorzugten Ausführungsbeispiels näher erläutert, ohne hierauf beschränkt zu sein.

Es zeigen:
- Fig. 1: eine Ausführungsform der erfindungsgemäßen Schalteinrichtung in Form einer NH-Lastschaltleiste, in einer perspektivischen Ansicht,
- Fig. 2: die Schalteinrichtung gemäß Fig. 1 in einer Explosionsdarstellung, in einer perspektivischen Ansicht,
- Fig. 3: die Schalteinrichtung gemäß Fig. 1, in einer Schnittdarstellung senkrecht zu einer X-Achse,
- Fig. 4: die Schalteinrichtung gemäß Fig. 1 mit einem von einem Trägerteil gelösten Oberteil, in einer Schnittansicht, wie in Fig. 3,
- Fig. 5: ein Lagerteil der Schalteinrichtung gemäß Fig. 1, in einer Explosionsdarstellung, in einer perspektivischen Ansicht,
- Fig. 6: eine Lagerplatte des Lagerteils gemäß Fig. 5 mit daran angeordneten Komponenten einer Elektronik, in einer perspektivischen Ansicht,
- Fig. 7: die Lagerplatte gemäß Fig. 6, in einer weiteren perspektivischen Ansicht,
- Fig. 8: eine separate Ansicht der Komponenten der Elektronik des Lagerteils gemäß Fig. 5, in einer perspektivischen Ansicht,
- Fig. 9: die Lagerplatte gemäß Fig. 6, in einer Explosionsdarstellung, in einer perspektivischen Ansicht,
- Fig. 10: die Lagerplatte gemäß Fig. 6, in einer Draufsicht in einer Z-Richtung.

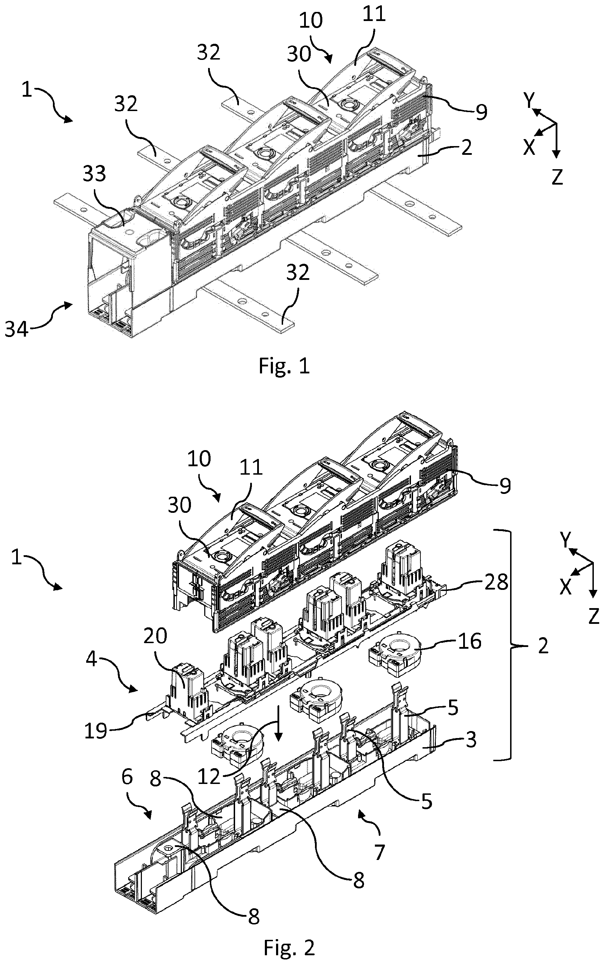

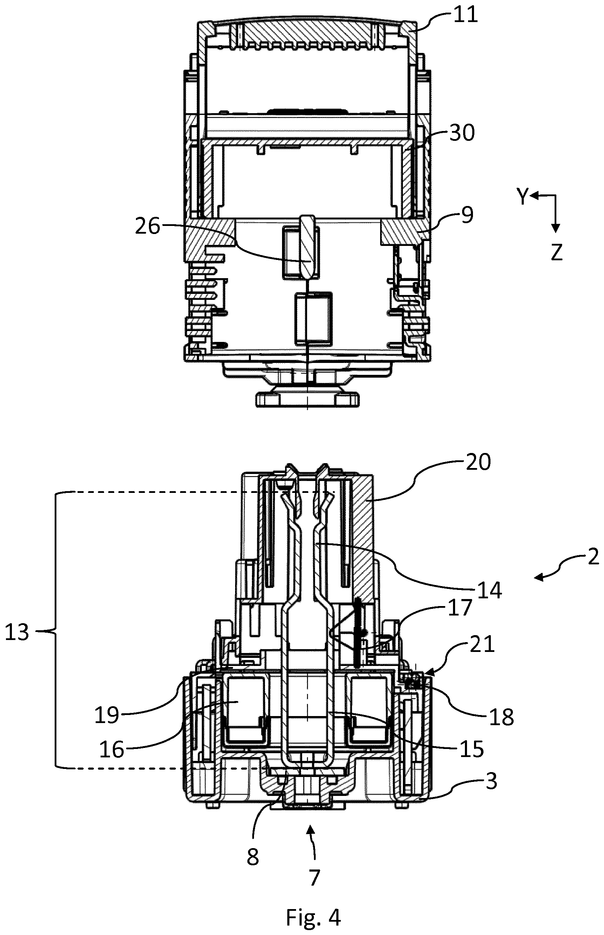

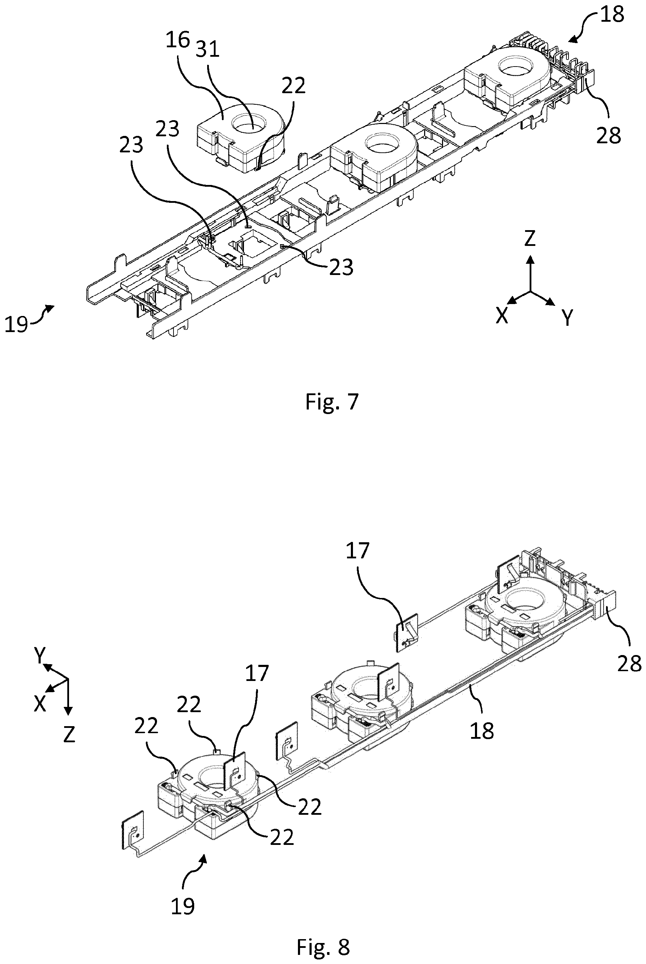

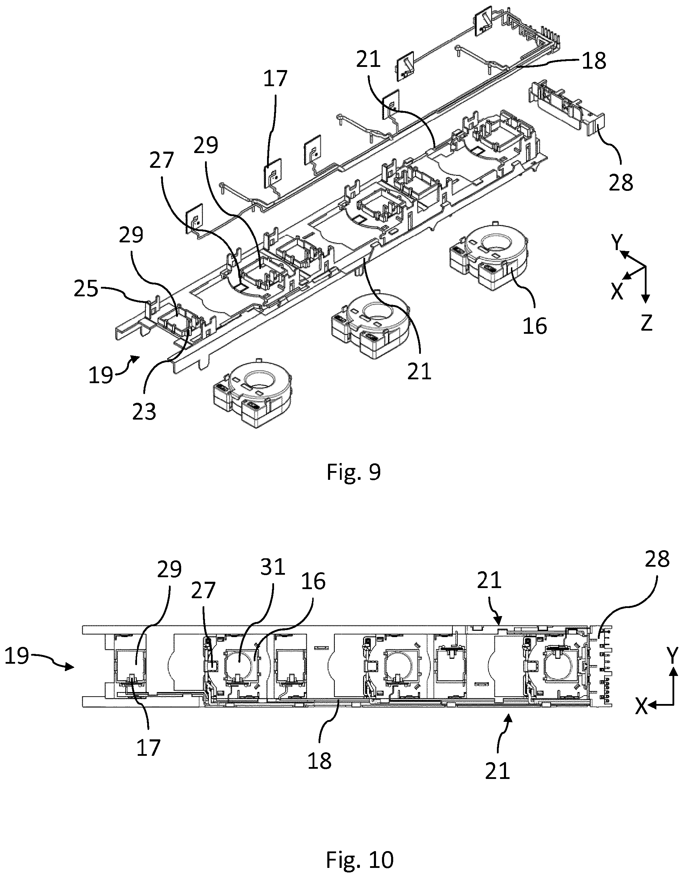

Die Fig. 1 bis 10 zeigen eine Schalteinrichtung 1, vorliegend eine Schaltleiste für NH-Sicherungen, auch als NH-Sicherungsschaltleiste bezeichnet. Die Schalteinrichtung 1 weist ein Trägerteil 2 und ein mit dem Trägerteil 2 verbindbares Oberteil 9 auf, wobei in dem Oberteil 9 drei Deckel 10 bewegbar gelagert sind. Der jeweilige Deckel 10 weist ein Deckelteil 30 und einen Schalthebel 11 auf, wobei durch Verschwenken des Schalthebels 11 das Deckelteil 30 von einer ersten Endstellung in eine zweite Endstellung verschoben werden kann. In dem Deckelteil 30 ist jeweils eine elektrische Sicherung oder ein Trennmesser lagerbar.

Das Trägerteil 2 weist ein Unterteil 3 und ein in das Unterteil einsteckbares Lagerteil 4 auf. An einer Frontseite 6 des Unterteils 3 sind drei Paare von Kontakten 5 angeordnet, zur Aufnahme der elektrischen Sicherung oder des Trennmessers, welches in dem dem jeweiligen Paar von Kontakten 5 zugeordneten Deckelteil 30 gelagert ist. Beim Verschieben des Deckelteils 30 von der ersten Endstellung in die zweite Endstellung wird die elektrische Sicherung bzw. das Trennmesser in das entsprechende Paar von Kontakten 5 eingefahren bzw. bei einem Überführen von der zweiten Endstellung in die erste Endstellung die elektrische Sicherung bzw. das Trennmesser aus dem entsprechenden Paar von Kontakten 5 herausgefahren. In der in der Figur 1 befinden sich die Deckelteile 30 in der zweiten Endstellung.

Die Kontakte 5 sind mit in dem Unterteil 3 gelagerten Stromleitern 8 verbunden. Der mit dem einen Kontakt 5 des jeweiligen Paars von Kontakten 5 verbundene Stromleiter 8 ist im Bereich einer Stirnseite 34 des Unterteils 2 mit einer Zugangsleitung als Stromzuführung verbindbar. Dieser Bereich ist mit einer Anschlussraumabdeckung 33 versehen. Der mit dem anderen Kontakt 5 des jeweiligen Paars von Kontakten 5 verbundene Stromleiter 8 ist auf einer der Frontseite 6 gegenüberliegenden Rückseite 7 mit einer Sammelschiene 32 als Stromabgang verbindbar, wie dies in der Figur 1 gezeigt ist.

Die Schalteinrichtung 1 weist eine in dem Lagerteil 4 angeordnete Komponente 16, 17, 18 einer Elektronik auf, wobei das Lagerteil 4 zusammen mit den in dem Lagerteil 4 gelagerten Komponenten 16, 17, 18 der Elektronik von der Frontseite 6 des Unterteils 3 aus entlang des Pfeils 12 auf das Unterteil 3 aufsteckbar ist.

Vorliegend weist die Komponente 16, 17, 18 der Elektronik mehrere einzelne Elemente auf, nämlich drei Stromwandler 16, sechs Spannungsabgriffe 17 und mehrere Anschlussleitungen 18 auf.

Der jeweilige Stromwandler 16 ist einem Kontakt 5 des jeweiligen Paars von Kontakten 5 zugeordnet, wobei der entsprechende Kontakt 5 eine Öffnung 31 des Stromwandlers 16 in der montierten Stellung durchsetzt. Der Kontakt 5 weist einen Aufsteckbereich 13 zum frontseitigen Aufstecken des Stromwandlers 16 auf den Kontakt 5 auf, wobei der Querschnitt der Öffnung 31 des Stromwandlers 16 größer ist als der Querschnitt des Kontakts 5 im Aufsteckbereich 13. Dadurch ist ein frontseitiges Aufstecken des Lagerteils 4 mit in dem Lagerteil 4 gelagerten Stromwandlern 16 möglich. Der jeweilige Kontakt 5 weist, in Aufsteckrichtung des Lagerteils 4, einen ersten Abschnitt 14 zur Aufnahme des Kontaktmessers 26 der elektrischen Sicherung auf und einen zweiten Abschnitt 15 zur Aufnahme des Stromwandlers 16 auf. Die Abschnitte 14 und 15 bilden somit den Aufsteckbereich 13 zum frontseitigen Aufstecken des Stromwandlers 16 auf den Kontakt 5. Der Kontakt 5 weist zwei Schenkel auf, wobei das Kontaktmesser 26 in dem ersten Abschnitt 14 zwischen die beiden Schenkel einführbar ist und das in dem ersten Abschnitt 14 angeordnete Kontaktmesser 26 die beiden Schenkel auf einander zugewandten Seiten kontaktiert. Somit dient der erste Abschnitt 14 zur inneren Aufnahme des Kontaktmessers 26. Hingegen ist der Stromwandler 16 außerhalb des Kontakts 5 angeordnet, vorliegend umschließt der Stromwandler 16 den zweiten Abschnitt 15. Somit dient der zweite Abschnitt 15 der äußeren Aufnahme des Stromwandlers 16.

Ferner ist jedem der sechs Kontakte 5 einer der Spannungsabgriffe 17 zugeordnet, wobei der jeweilige Spannungsabgriff 17 einen Federkontakt aufweist, wobei dieser Federkontakt den entsprechenden Kontakt 5 in einem montierten Zustand der Schalteinrichtung 1 kontaktiert.

Die mehreren Anschlussleitungen 18 sind ebenfalls in dem Lagerteil 4 gelagert und mit den Stromwandlern 16 bzw. den Spannungsabgriffen 17 verbunden sowie in einer Buchse 28 zusammengeführt, wobei diese Buchse 28 vorliegend einen Bestandteil des Lagerteils 4 bildet.

Vorliegend sind sowohl das Unterteil 3 als auch das Oberteil 9 nebst den darin gelagerten Deckeln 10 frei von jeglichen Komponenten einer Elektronik. Dementsprechend sind sämtliche Komponenten 16, 17, 18 der Elektronik der Schalteinrichtung in dem Lagerteil 4 des Trägerteils 2 gelagert. Es ist aber durchaus denkbar, dass die Schalteinrichtung 1 weitere Komponenten der Elektronik, beispielsweise eine Messplatine aufweist. Vorzugsweise sind diese weiteren Komponenten in dem Oberteil 9 gelagert. Vorzugsweise sind sämtliche in dem Trägerteil 2 angeordnete oder anzuordnende Komponenten der Elektronik in dem Lagerteil 4 gelagert bzw. lagerbar, somit das Unterteil 3 frei von jeglichen Komponenten der Elektronik.

Um die Komponente 16, 17, 18 der Elektronik, konkret die Stromwandler 16 und die Spannungsabgriffe 17 besonders gut in dem Lagerteil 4 zu lagern, sind die Stromwandler 16 und die Spannungsabgriffe 17 in das Lagerteil 4 einsteckbar.

Das Lagerteil 4 weist eine Lagerplatte 19 auf, wobei der jeweilige Kontakt 5 eine Durchgangsöffnung 29 der Lagerplatte 19 in einem auf das Unterteil 3 aufgesteckten Zustand des Lagerteils 4 durchsetzt. Des Weiteren weist das Lagerteil 4 jeweils eine Abdeckhaube 20 zum Abdecken des jeweiligen die Lagerplatte 19 durchsetzenden Kontakts 5 auf, wobei die jeweilige Abdeckhaube 20 mit der Lagerplatte 19 rastierend verbunden bzw. verbindbar ist.

Vorliegend ist die Lagerplatte 19 mit dem Unterteil 3 rastierend verbindbar und die jeweilige Abdeckhaube 20 wiederum mit der Lagerplatte 19 rastierend verbindbar.

Vorliegend sind die rastierenden Verbindungen als Klipsverbindungen ausgebildet.

Der jeweilige Stromwandler 16 ist an einer dem Unterteil 3 zuzuwendenden Seite des Lagerteils 4 angeordnet, vorliegend von der dem Unterteil 3 zuzuwendenden Seite der Lagerplatte 19 aus in die Lagerplatte 19 einsteckbar. Zu diesem Zweck weist der jeweilige Stromwandler 16 an seiner dem Lagerteil 4 zuzuwendenden Seite vier hervorstehende Haltestrukturen 22 auf, welche in in der Lagerplatte 19 ausgebildete, zu den Haltestrukturen 22 korrespondierende Gegenstrukturen 23 einsteckbar sind, zum Halten der Stromwandler 16 in der Lagerplatte 19. Die Haltestrukturen 22 und die korrespondierenden Gegenstrukturen 23 bilden vorliegend eine Klipsverbindung. Dadurch ist ein besonders einfaches Verbinden der Stromwandler 16 mit der Lagerplatte 19 und somit mit dem Lagerteil 4 möglich.

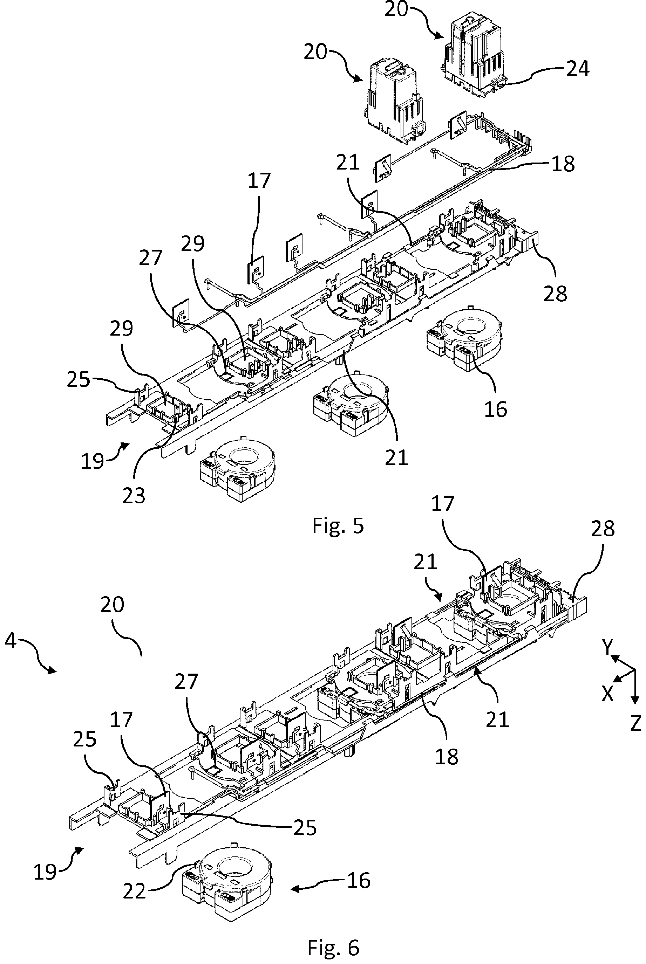

Wie beispielsweise der Fig. 6 zu entnehmen ist, sind die Spannungsabgriffe 17 an einer dem Unterteil 3 abzuwendenden Seite der Lagerplatte 19 und somit auf der den Spannungsabgriffen 16 gegenüberliegenden Seite der Lagerplatte 19 angeordnet.

Vorliegend sind die Spannungsabgriffe 17 von der dem Unterteil 3 abzuwendenden Seite der Lagerplatte 19 aus in die Lagerplatte 19 einsteckbar.

Um den jeweiligen Spannungsabgriff 17 in der Lagerplatte 19 zu halten, weist die Lagerplatte 19 jeweils eine in Form einer Aufnahme ausgebildete Gegenstruktur 23 auf, in welche der jeweilige Spannungsabgriff 17 einsteckbar ist, wobei die Gegenstruktur 23 mit einer Leiterplatte des Spannungsabgriffs 17 klemmend zusammenwirkt, insofern die Leiterplatte des Spannungsabgriffs 17 eine mit der Gegenstruktur 23 zusammenwirkende Haltestruktur 22 bildet, zum Halten des jeweiligen Spannungsabgriffs 17 in der Lagerplatte 19.

Vorliegend ist das Lagerteil 4, konkret die Lagerplatte 19 und die daran befestigten Abdeckhauben 20, derart gestaltet, dass das Lagerteil 4 die Stromleiter 8 und die Kontakte 5 frontseitig abdeckt. Insofern bildet das Lagerteil 4 ein Abdeckteil des Trägerteils 2 zum frontseitigen Abdecken der in dem Unterteil 3 angeordneten Stromleiter 8 und Kontakte 5. Die jeweilige Abdeckhaube 20 ist lösbar, vorliegend rastierend lösbar mit der Lagerplatte 19 verbindbar, wobei die jeweilige Abdeckhaube 20 zu diesem Zweck eine Haltestruktur 24 und die Lagerplatte 19 eine zu der Haltestruktur 24 korrespondierende Gegenstruktur 25 aufweist. Um ein besonders einfaches Verlegen der Verkabelung bzw. der Anschlussleitungen 18 der Komponente 16, 17, 18 der Elektronik zu ermöglichen, weist die Lagerplatte 19 einen Kanal 21 zur Aufnahme der Anschlussleitungen 18 auf, wobei der Kanal 21 zu der dem Unterteil 3 abzuwendenden Seite hin offen ist. Dadurch ist ein besonders einfaches Verlegen der Anschlussleitungen 18 in der Lagerplatte 19 möglich. Die Anschlussleitungen 18 sind an einer Stirnseite der Lagerplatte 19 aus der Lagerplatte 19 herausgeführt und in der Buchse 28 gebündelt, wobei diese Buchse 28 wiederum mit der Lagerplatte 19 verbindbar ist, vorliegend in die Lagerplatte 19 einsteckbar ist.

Die Lagerplatte 19 weist zwei parallel verlaufende Kanäle 21 auf, wobei die Kanäle 21 an gegenüberliegenden Randbereichen der Lagerplatte 19 ausgebildet sind, wobei einer der Kanäle 21 eine geringere Längserstreckung aufweist als der andere Kanal 21.

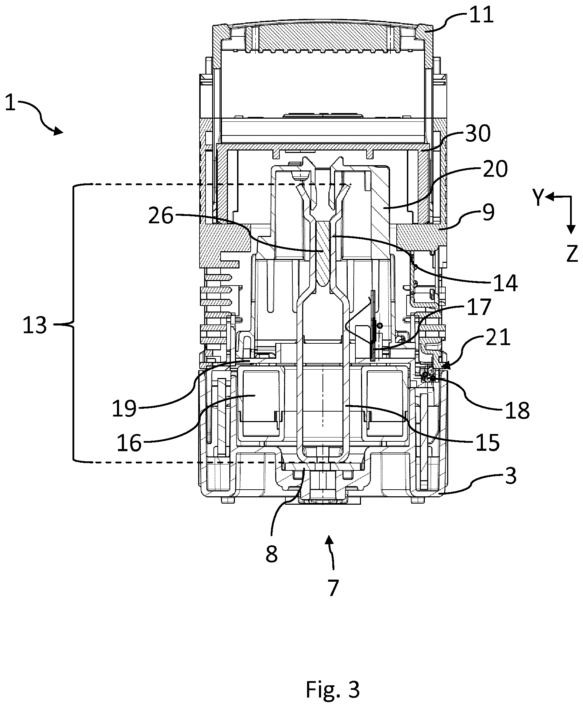

Wie insbesondere der Schnittansicht der Fig. 3 zu entnehmen ist, deckt das Oberteil 9 die offenen Kanäle 21 auf der dem Unterteil 3 abgewandten Seite der Lagerplatte 19 ab. Dadurch sind die in den Kanälen 21 verlegten bzw. angeordneten Anschlussleitungen 18 besonders gut gegen von außen einwirkende Kräfte geschützt und ein ungewolltes Lösen der Anschlussleitungen 18 aus dem Kanal 21 wird durch das Oberteil 9 verhindert.

Die Lagerplatte 19 weist im Bereich jeder Haube 20 bzw. im Bereich der Lagerung des jeweiligen Stromwandlers 16 in der Lagerplatte 19 eine entfernbare Abdeckplatte 27 auf. Um zu erkennen, dass die Schalteinrichtung 1 mit einem Stromwandler 16 im Bereich des jeweiligen Kontakts 5 ausgerüstet ist, kann diese Abdeckplatte 27 entfernt werden, womit dort ein im Wesentlichen rechteckiges Loch gebildet ist. Dadurch können die Daten, betreffend die technische Spezifikation des Stromwandlers 16, die auf der dem Lagerteil 4 zugewandten Seite des Stromwandlers 16 aufgedruckt sind, frontseitig von einem Verwender eingesehen werden. Dies ermöglicht es dem Verwender in besonders einfacher Art und Weise zu überprüfen, ob und welche Art Stromwandler 16 in der Schalteinrichtung 1 verbaut sind.

Dadurch, dass sämtliche Komponenten 16, 17, 18 der Elektronik des Trägerteils 2 in dem Lagerteil 4 gelagert, vorliegend in die Lagerplatte 19 eingesteckt und somit fest mit dem Lagerteil 4 verbunden sind, kann die Schalteinrichtung 1 in besonders einfacher Art und Weise mit der Komponente 16, 17, 18 der Elektronik ausgerüstet bzw. eine vorhandene Schalteinrichtung 1 mit einer entsprechenden Komponente 16, 17, 18 der Elektronik besonders einfach nachgerüstet werden, da die vorzunehmenden Handlungen zwecks Versehen der Schalteinrichtung 1 mit der Komponente 16, 17, 18 der Elektronik an dem von dem Unterteil 3 separierbaren Lagerteil 4 erfolgen kann. Dies hat insbesondere den Vorteil, dass bereits mit Stromzuführungen oder Stromabgängen verbundene Schalteinrichtungen 1, beispielsweise Schalteinrichtungen 1, die bereits mit einem Sammelschienensystem verbunden sind, wie dies in der Fig. 1 dargestellt ist, in einfacher Art und Weise mit der entsprechenden Komponente 16, 17, 18 der Elektronik nachgerüstet werden können, da zwecks Nachrüsten der Komponente 16, 17, 18 der Elektronik, nach einem Abschalten der Stromzuführung zu der Schalteinrichtung 1, ein Abklemmen der Schalteinrichtung 1 von den Stromzugängen bzw. den Stromabgängen nicht erforderlich ist, da die mit den Stromabgängen bzw. Stromzugängen verbundenen Teile der Schalteinrichtung 1, nämlich das Unterteil 3 und die in dem Unterteil 3 gelagerten Kontakte 5 und Stromleitungen 8, nicht demontiert werden müssen, sondern lediglich nach dem Entfernen des Oberteils 9 von dem Trägerteil 2, das in das Unterteil 3 eingesteckte und mit diesem verklipste Lagerteil 4 gelöst und von dem Unterteil 3 entfernt werden muss und im Anschluss an das Nachrüsten des Lagerteils 4 mit der Komponente 16, 17, 18 der Elektronik das Lagerteil 4 mit der in dem Lagerteil 4 gelagerten Komponente 16, 17, 18 der Elektronik von der Frontseite 6 des Unterteils 3 aus auf das Unterteil 3 aufgesteckt werden muss.

### Bezugszeichenliste

- 1: Schalteinrichtung
- 2: Trägerteil
- 3: Unterteil
- 4: Lagerteil
- 5: Kontakt
- 6: Frontseite
- 7: Rückseite
- 8: Stromleiter
- 9: Oberteil
- 10: Deckel
- 11: Schalthebel
- 12: Pfeil
- 13: Aufsteckbereich
- 14: Erster Abschnitt
- 15: Zweiter Abschnitt
- 16: Stromwandler
- 17: Spannungsabgriff
- 18: Anschlussleitung
- 19: Lagerplatte
- 20: Abdeckhaube
- 21: Kanal
- 22: Haltestruktur
- 23: Gegenstruktur
- 24: Haltestruktur
- 25: Gegenstruktur
- 26: Kontaktmesser
- 27: Abdeckplatte
- 28: Buchse
- 29: Durchgangsöffnung
- 30: Deckelteil
- 31: Öffnung
- 32: Sammelschiene
- 33: Anschlussraumabdeckung
- 34: Stirnseite

## Patentansprüche

1. Schalteinrichtung (1), insbesondere Schaltleiste für Niederspannungs-Hochleistungs-Sicherungen, aufweisend ein Trägerteil (2) und aufweisend eine in dem Trägerteil (2) angeordnete Komponente (16, 17, 18) einer Elektronik, wobei das Trägerteil (2) ein Unterteil (3) und ein mit dem Unterteil (3) verbindbares Lagerteil (4) aufweist, wobei an einer Frontseite (6) des Unterteils (3) zumindest ein Paar von Kontakten (5) angeordnet ist, zur Aufnahme einer elektrischen Sicherung oder eines Trennmessers,
**dadurch gekennzeichnet, dass**
in dem Lagerteil (4) die Komponente (16, 17, 18) der Elektronik gelagert ist, wobei die Komponente (16, 17, 18) der Elektronik lösbar an dem Lagerteil (4) befestigt ist, wobei das Lagerteil (4), mit der in dem Lagerteil (4) gelagerten Komponente (16, 17, 18) der Elektronik, von der Frontseite (6) des Unterteils (3) aus auf das Unterteil (3) aufsteckbar ist.

2. Schalteinrichtung (1) nach Anspruch 1, wobei zumindest einer der Kontakte (5) mit einem in dem Unterteil (3) gelagerten Stromleiter (8) verbunden ist.

3. Schalteinrichtung (1) nach Anspruch 1 oder 2, wobei das Unterteil (3) mit einer der Frontseite (6) gegenüberliegenden Rückseite (7) an einer Sammelschiene (32), insbesondere an einem Sammelschienensystem anordenbar ist.

4. Schalteinrichtung (1) nach einem der Ansprüche 1 bis 3, wobei die Schalteinrichtung (1) ein Oberteil (9) aufweist, wobei das Oberteil (9) frontseitig an dem Trägerteil anordenbar ist.

5. Schalteinrichtung (1) nach einem der Ansprüche 1 bis 4, wobei das Lagerteil (4) eine Lagerplatte (19) aufweist, wobei der jeweilige Kontakt (5) eine Durchgangsöffnung (29) der Lagerplatte (19) durchsetzt.

6. Schalteinrichtung (1) nach einem der Ansprüche 1 bis 5, wobei das Lagerteil (4) jeweils eine Abdeckhaube (20) zum Abdecken des jeweiligen Kontakts (5) aufweist, insbesondere die Abdeckhaube (20) lösbar mit der Lagerplatte (19) verbunden ist, vorzugsweise die Abdeckhaube (20) mit der Lagerplatte (19) rastierend verbunden ist.

7. Schalteinrichtung (1) nach einem der Ansprüche 1 bis 6, wobei die Komponente (16, 17, 18) der Elektronik einen Stromwandler (16) oder einen Stromsensor aufweist, wobei in einem auf das Unterteil (3) aufgesteckten Zustand des Lagerteils (4) der Kontakt (5) oder eine Anordnung von Kontakt (5) und Stromleiter (8) eine Öffnung (31) des Stromwandlers (16) bzw. eine Öffnung des Stromsensors durchsetzt.

8. Schalteinrichtung (1) nach Anspruch 7, wobei der Stromwandler (16) oder der Stromsensor an einer dem Unterteil (3) zuzuwendenden Seite des Lagerteils (4), insbesondere an einer dem Unterteil (3) zuzuwendenden Seite der Lagerplatte (19), angeordnet ist.

9. Schalteinrichtung (1) nach einem der Ansprüche 1 bis 8, wobei die Komponente (16, 17, 18) der Elektronik einen Spannungsabgriff (17) aufweist, zum Abgreifen einer Spannung an einem der Kontakte (5) und/oder an einem der Stromleiter (8).

10. Schalteinrichtung (1) nach Anspruch 9, wobei der Spannungsabgriff (17) an einer dem Unterteil (3) abzuwendenden Seite des Lagerteils (4), insbesondere an einer dem Unterteil (3) abzuwendenden Seite der Lagerplatte (19), angeordnet ist.

11. Schalteinrichtung (1) nach einem der Ansprüche 1 bis 10, wobei das Lagerteil (4) die Stromleiter (8) und/oder die Kontakte (5) frontseitig abdeckt.

12. Schalteinrichtung (1) nach einem der Ansprüche 1 bis 11, wobei das Lagerteil (4), insbesondere die Lagerplatte (19), einen Kanal (21) zur Aufnahme einer Anschlussleitung (18) der Komponente (16, 17, 18) der Elektronik aufweist, insbesondere der Kanal (21) als ein zu der dem Unterteil (3) abzuwendenden Seite hin offener Kanal (21) ausgebildet ist.

13. Schalteinrichtung (1) nach Anspruch 4 und 12, wobei das Oberteil (9) den zu der dem Unterteil (3) abzuwendenden Seite hin offenen Kanal (21) abdeckt.

14. Schalteinrichtung (1) nach einem der Ansprüche 1 bis 13, wobei die Komponente (16) der Elektronik eine Haltestruktur (22) und das Lagerteil (4), insbesondere die Lagerplatte (19), eine zu der Haltestruktur (22) korrespondierende Gegenstruktur (23) aufweist, zum Halten der Komponente (16) an dem Lagerteil (4), insbesondere zum Halten der Komponente (16) an der Lagerplatte (19).

15. Schalteinrichtung (1) nach einem der Ansprüche 1 bis 14, wobei Anschlussleitungen (18) der Komponente (16, 17, 18) der Elektronik auf einer dem Unterteil (3) abzuwendenden Seite des Lagerteils (4) angeordnet sind, insbesondere auf einer dem Unterteil (3) abzuwendenden Seite der Lagerplatte (19) angeordnet sind.

## Claims

1. Switching device (1), in particular switching strip for low voltage, high power fuses, having a carrier part (2) and having a component (16, 17, 18) of an electronics system that is arranged in the carrier part (2), wherein the carrier part (2) has a bottom part (3) and a bearing part (4) which can be connected to the bottom part (3), wherein at least one pair of contacts (5) is arranged on a front side (6) of the bottom part (3), for receiving an electrical fuse or a disconnecting blade,
**characterized in that**
the component (16, 17, 18) of the electronics system is mounted in the bearing part (4), wherein the component (16, 17, 18) of the electronics system is releasably attached to the bearing part (4), wherein the bearing part (4), with the component (16, 17, 18) of the electronics system that is mounted in the bearing part (4), can be plugged onto the bottom part (3) from the front side (6) of the bottom part (3).

2. Switching device (1) according to Claim 1, wherein at least one of the contacts (5) is connected to a current conductor (8) which is mounted in the bottom part (3).

3. Switching device (1) according to Claim 1 or 2, wherein the bottom part (3) can be arranged on a busbar (32), in particular on a busbar system, by way of a rear side (7) which is situated opposite the front side (6).

4. Switching device (1) according to one of Claims 1 to 3, wherein the switching device (1) has a top part (9), wherein the top part (9) can be arranged on the front side of the carrier part.

5. Switching device (1) according to one of Claims 1 to 4, wherein the bearing part (4) has a bearing plate (19), wherein the respective contact (5) passes through a passage opening (29) in the bearing plate (19).

6. Switching device (1) according to one of Claims 1 to 5, wherein the bearing part (4) respectively has a covering hood (20) for covering the respective contact (5), in particular the covering hood (20) is releasably connected to the bearing plate (19), preferably the covering hood (20) is connected in a latching manner to the bearing plate (19).

7. Switching device (1) according to one of Claims 1 to 6, wherein the component (16, 17, 18) of the electronics system has a current converter (16) or a current sensor, wherein, in a state in which the bearing part (4) is plugged onto the bottom part (3), the contact (5) or an arrangement of the contact (5) and the current conductor (8) passes through an opening (31) in the current converter (16) or an opening in the current sensor.

8. Switching device (1) according to Claim 7, wherein the current converter (16) or the current sensor is arranged on a side of the bearing part (4) that is intended to face the bottom part (3), in particular on a side of the bearing plate (19) that is intended to face the bottom part (3).

9. Switching device (1) according to one of Claims 1 to 8, wherein the component (16, 17, 18) of the electronics system has a voltage tap (17) for tapping off a voltage from one of the contacts (5) and/or from one of the current conductors (8).

10. Switching device (1) according to Claim 9, wherein the voltage tap (17) is arranged on a side of the bearing part (4) that is intended to face away from the bottom part (3), in particular on a side of the bearing plate (19) that is intended to face away from the bottom part (3) .

11. Switching device (1) according to one of Claims 1 to 10, wherein the bearing part (4) covers the front side of the current conductors (8) and/or of the contacts (5).

12. Switching device (1) according to one of Claims 1 to 11, wherein the bearing part (4), in particular the bearing plate (19), has a channel (21) for receiving a connection line (18) of the component (16, 17, 18) of the electronics system, in particular the channel (21) is designed as a channel (21) which is open to the side which is intended to face away from the bottom part (3).

13. Switching device (1) according to Claims 4 and 12, wherein the top part (9) covers the channel (21) which is open to the side which is intended to face away from the bottom part (3).

14. Switching device (1) according to one of Claims 1 to 13, wherein the component (16) of the electronics system has a holding structure (22) and the bearing part (4), in particular the bearing plate (19), has a mating structure (23) which corresponds to the holding structure (22), for holding the component (16) on the bearing part (4), in particular for holding the component (16) on the bearing plate (19).

15. Switching device (1) according to one of Claims 1 to 14, wherein connection lines (18) of the component (16, 17, 18) of the electronics system are arranged on a side of the bearing part (4) which is intended to face away from the bottom part (3), in particular on a side of the bearing plate (19) which is intended to face away from the bottom part (3).

## Revendications

1. Dispositif de commutation (1), en particulier barrette de commutation pour fusibles à basse tension à haute performance, ledit dispositif de commutation comportant une pièce porteuse (2) et un composant (16, 17, 18) d'une électronique qui est disposé dans la pièce porteuse (2), la pièce porteuse (2) comportant une partie inférieure (3) et une partie de support (4) qui peut être reliée à la partie inférieure (3), au moins une paire de contacts (5) étant disposée sur un côté avant (6) de la partie inférieure (3) et destinée à recevoir un fusible électrique ou un couteau de sectionnement,
**caractérisé en ce que**
le composant (16, 17, 18) de l'électronique est logé dans la partie de support (4), le composant (16, 17, 18) de l'électronique étant fixé de manière amovible à la partie de support (4), la partie de support (4), pourvue du composant (16, 17, 18) de l'électronique, logée dans la partie de support (4), pouvant être enfichée sur la partie inférieure (3) depuis le côté avant (6) de la partie inférieure (3).

2. Dispositif de commutation (1) selon la revendication 1, l'un au moins des contacts (5) étant relié à un conducteur de courant (8) logé dans la partie inférieure (3) .

3. Dispositif de commutation (1) selon la revendication 1 ou 2, la partie inférieure (3) pouvant être disposée avec un côté arrière (7), opposé au côté avant (6), sur une barre collectrice (32), en particulier sur un système de barres collectrices.

4. Dispositif de commutation (1) selon l'une des revendications 1 à 3, le dispositif de commutation (1) comportant une partie supérieure (9), la partie supérieure (9) pouvant être disposée du côté avant sur la pièce porteuse.

5. Dispositif de commutation (1) selon l'une des revendications 1 à 4, la partie de support (4) comportant une plaque d'appui (19), le contact respectif (5) passant par une ouverture traversante (29) de la plaque d'appui (19) .

6. Dispositif de commutation (1) selon l'une des revendications 1 à 5, la partie de support (4) comportant un capot de recouvrement (20) destiné à recouvrir le contact respectif (5), en particulier le capot de recouvrement (20) étant relié de manière amovible à la plaque d'appui (19), de préférence le capot de recouvrement (20) étant relié par encliquetage à la plaque d'appui (19).

7. Dispositif de commutation (1) selon l'une des revendications 1 à 6, le composant (16, 17, 18) de l'électronique comportant un transformateur de courant (16) ou un capteur de courant, lorsque la partie de support (4) est enfichée sur la partie inférieure (3), le contact (5) ou un ensemble contact (5) et conducteur de courant (8) passant par une ouverture (31) du transformateur de courant (16) ou une ouverture du capteur de courant.

8. Dispositif de commutation (1) selon la revendication 7, le transformateur de courant (16) ou le capteur de courant étant disposé sur un côté de la partie de support (4) qui est dirigé vers la partie inférieure (3), en particulier sur un côté de la plaque d'appui (19) qui est dirigé vers la partie inférieure (3).

9. Dispositif de commutation (1) selon l'une des revendications 1 à 8, le composant (16, 17, 18) de l'électronique comportant une prise de tension (17) destinée à prendre une tension sur l'un des contacts (5) et/ou sur l'un des conducteurs de courant (8).

10. Dispositif de commutation (1) selon la revendication 9, la prise de tension (17) étant disposée sur un côté de la partie de support (4) qui est opposé à la partie inférieure (3), en particulier sur un côté de la plaque d'appui (19) qui est opposé à la partie inférieure (3).

11. Dispositif de commutation (1) selon l'une des revendications 1 à 10, la partie de support (4) recouvrant du côté avant les conducteurs (8) et/ou les contacts (5).

12. Dispositif de commutation (1) selon l'une des revendications 1 à 11, la partie de support (4), en particulier la plaque d'appui (19), comportant un canal (21) destiné à recevoir une ligne de raccordement (18) du composant (16, 17, 18) de l'électronique, en particulier le canal (21) étant conçu comme un canal (21) ouvert en direction du côté qui est opposé à la partie inférieure (3).

13. Dispositif de commutation (1) selon les revendications 4 et 12, la partie supérieure (9) recouvrant le canal (21) ouvert en direction du côté qui est opposé à la partie inférieure (3).

14. Dispositif de commutation (1) selon l'une des revendications 1 à 13, le composant (16) de l'électronique comportant une structure de retenue (22) et la partie de support (4), en particulier la plaque d'appui (19), comportant une structure homologue (23) correspondant à la structure de retenue (22) et destinée à maintenir le composant (16) sur la partie de support (4), en particulier pour maintenir le composant (16) sur la plaque d'appui (19).

15. Dispositif de commutation (1) selon l'une des revendications 1 à 14, les lignes de raccordement (18) du composant (16, 17, 18) de l'électronique étant disposées sur un côté de la partie de support (4) qui est opposé à la partie inférieure (3), en particulier sur un côté de la plaque d'appui (19) qui est opposé à la partie inférieure (3).
